# EUROPÄISCHE PATENTSCHRIFT

(11) **EP 3 891 384 B1**
(45) Veröffentlichungstag und Bekanntmachung des Hinweises auf die Patenterteilung: **31.12.2025**
(21) Anmeldenummer: 19817240.5
(22) Anmeldetag: 05.12.2019
(51) Int. Cl.: F03D 7/02, F03D 7/04, F03D 7/00, G06Q 50/06

(54) **VERFAHREN ZUM BETREIBEN MINDESTENS EINER WINDENERGIEANLAGE SOWIE VORRICHTUNG DAFÜR**
METHOD FOR OPERATING AT LEAST ONE WIND TURBINE, AND DEVICE THEREFOR
PROCÉDÉ SERVANT À FAIRE FONCTIONNER AU MOINS UNE ÉOLIENNE, AINSI QUE DISPOSITIF ASSOCIÉ

(30) Priorität: 06.12.2018 DE 102018131188
(43) Veröffentlichungstag der Anmeldung: 13.10.2021
(73) Patentinhaber: Wobben Properties GmbH, 26607 Aurich (DE)
(72) Erfinder: BROMBACH, Johannes, 13437 Berlin (DE); AMELSBERG, Swantje, 27804 Berne (DE); KLEIN, Christoph, 83278 Traunstein (DE)
(74) Vertreter: Eisenführ Speiser
(86) Internationale Anmeldenummer: PCT/EP2019/083861
(87) Internationale Veröffentlichungsnummer: WO 2020/115229

(56) Entgegenhaltungen:
- EP-A1- 2 557 311
- WO-A1-2013/023702
- WO-A2-2012/041327
- US-A1- 2013 204 447

## Beschreibung

Die Erfindung betrifft den Bereich der Windenergieanlagen. Windenergieanlagen sind allgemein bekannt und dienen dazu, kinetische Energie aus dem Wind zu entnehmen und in elektrische Energie umzuwandeln, um diese in ein elektrisches Netzwerk einzuspeisen.

Derartige Windenergieanlagen weisen einen Generator und einen aerodynamischen Rotor mit einstellbarer Drehzahl auf. Der aerodynamische Rotor ist dabei zu unterscheiden von einem elektrodynamischen Rotor, der Teil des Generators ist. Es ist bekannt, die Drehzahl des aerodynamischen Rotors durch Verstellen der Winkel der Rotorblätter des aerodynamischen Rotors und/oder durch Einstellen eines Erregerfelds bei einem fremderregten Generator einzustellen oder zu verändern. In Abhängigkeit unterschiedlicher Blattwinkel oder unterschiedlicher Erregerfelder kann eine Windenergieanlage demnach bei gegebenen konstanten Windbedingungen eine unterschiedlich hohe elektrische Energie in ein elektrisches Netz einspeisen.

Üblicherweise wird eine solche Windenergieanlage, bezogen auf die jeweils vorherrschenden Windbedingungen, in einem optimalen Betriebspunkt betrieben. Die vorherrschenden Windbedingungen beziehen sich insbesondere auf die vorherrschenden Windgeschwindigkeiten, was vereinfachend als einziges Merkmal der vorherrschenden Windbedingungen betrachtet werden kann. In der Realität wären weitere Bedingungen wie beispielsweise Böigkeit des Windes oder auch die Dichte der Luft zu berücksichtigen, was der Einfachheit halber ausklammerbar ist. Somit ist grundsätzlich jeder Windgeschwindigkeit ein optimaler Betriebspunkt zuordenbar. Dabei ist unter einem optimalen Betriebspunkt ein solcher zu verstehen, bei dem die Windenergieanlage möglichst viel Energie aus dem Wind entnimmt und ins elektrische Netz einspeist, wobei aber gleichzeitig Randbedingungen, wie insbesondere Stabilität des Betriebspunktes und Anlagenbelastung, wie insbesondere auch Verschleiß der Anlage, berücksichtigt werden. Ein solcher, optimaler Betriebspunkt, ist insbesondere, was nachfolgend zur Beschreibung ausreicht, durch eine entsprechend optimale Drehzahl und optimale Leistungsabgabe gekennzeichnet. Die Leistungsabgabe betrifft hierbei diejenige Leistung, die in das elektrische Netz eingespeist wird. Diejenige Leistung, die der Generator hierbei abgibt, kann höher liegen, weil von dieser beispielsweise Verluste abzuziehen sind.

Demnach werden solche optimalen Betriebspunkte mit einer optimalen Drehzahl für im Grunde jede Windgeschwindigkeit für die jeweilige Anlage vorbestimmt und die Windenergieanlage so betrieben, dass diese in Abhängigkeit der Windgeschwindigkeit in ihrem optimalen Betriebspunkt arbeitet.

Immer häufiger kommt Windenergieanlagen heutzutage auch die Aufgabe zu, das elektrische Netz, in das sie einspeisen, zu stützen. Hierzu sind aus dem Stand der Technik Lösungen bekannt, bei denen beispielsweise die Leistungsregelung zusätzlich frequenzabhängig betrieben wird. Es wird beispielsweise vorgeschlagen, dass mit steigender Netzfrequenz die Leistung, die die Windenergieanlage in das Netz einspeist, reduziert wird, sobald die Netzfrequenz einen Grenzwert überschritten hat. Hierdurch wird eine Netzsituation berücksichtigt, bei der ein Energieüberangebot besteht, was aufgrund des Verhaltens großer Kraftwerke zu einer Frequenzzunahme führt.

Demnach ist es aus dem Stand der Technik bekannt, Windenergieanlagen immer so zu betreiben, dass diese in ihrem optimalen Betriebspunkt möglichst viel Leistung in ein Netz einspeisen, wobei diese Leistung jedoch lediglich zur Stützung des Netzes reduziert werden kann, also der Betrieb vom optimalen Betriebspunkt abweicht.

Um so eine Windenergieanlage mit möglichst hohem Ertrag an beliebigen Standorten betreiben zu können, ist zur Erlangung eines Standardsicherheitsnachweises für den Betrieb, der heutzutage zwingend notwendig für eine Betriebserlaubnis ist, eine bestimmte strukturelle Auslegung der Windenergieanlage nötig. Es ist jedoch erstrebenswert, zur Materialeinsparung, und damit zur Kostenreduzierung der Windenergieanlagen, den strukturellen Aufwand bei der Auslegung gering zu halten oder sogar zu reduzieren. Ein Standardsicherheitsnachweis für derartige Windenergieanlagen mit strukturellen Einsparungen, die auch an Standorten angeboten werden, an denen sie außerhalb ihrer Auslegungswind- und Turbulenzklasse liegen, wird jedoch dann gewährleistet, wenn diese Windenergieanlagen mit einem reduzierten Betrieb betrieben werden. Hierdurch wird der Betrieb jedoch häufig unwirtschaftlich. Das Dokument EP 2 557 311 A1 offenbart daher, Informationen vom Netzbetreiber, die auf Energiepreise bezogen sind, bei der Steuerung einer Windenergieanlage zu berücksichtigen. Ein weiteres Beispiel aus dem Stand der Technik ist aus WO2012/041327A2 bekannt.

In der prioritätsbegründenden deutschen Patentanmeldung hat das Deutsche Patent- und Markenamt die folgenden Dokumente recherchiert: GB 2 484 266 A, US 2013 / 0 204 447 A1, US 2018 / 0 173 215 A1 und US 2018 / 0 187 648 A1.

Aufgabe der vorliegenden Erfindung ist es daher, eine Windenergieanlage mit reduzierter struktureller Auslegung wirtschaftlich an Standorten betreiben zu können, die außerhalb ihrer Auslegungswind- und Turbulenzklasse liegen. Zumindest soll eine Alternative zum derzeitigen Betrieb einer Windenergieanlage vorgeschlagen werden.

Die vorliegende Erfindung betrifft hierzu zunächst den Betrieb einer Windenergieanlage, bei denen ein erstes Signal empfangen wird, das indikativ für eine Höhe einer Vergütung von elektrischer Energie ist, die aktuell und/oder zukünftig in ein Netz, mit dem die zu betreibende Windenergieanlage verbunden ist, eingespeist wird. Das erste Signal ist indikativ für eine Höhe einer Vergütung, zeigt also die Höhe der Vergütung an. Das heißt, das erste Signal umfasst beispielsweise Daten, aus denen sich mittelbar die Höhe der Vergütung ableiten lässt, oder die unmittelbar die Höhe einer Vergütung angeben. So umfasst das erste Signal beispielsweise eine Angabe, in Eurocent pro Kilowatt oder dergleichen. Hierbei wird die Vergütung mit dem ersten Signal beispielsweise für den aktuellen Zeitpunkt und alternativ oder zusätzlich für einen zukünftigen Zeitraum, oder einen vorbestimmten Zeitraum, der bis in die Zukunft liegt, angezeigt. Weiter wird dann gemäß der Erfindung ein Steuersignal in Abhängigkeit dieses ersten Signals erzeugt und die Windenergieanlage mit dem Steuersignal angesteuert, um eine von dem Steuersignal abhängige Leistung mit der Windenergieanlage zu erzeugen.

Dank dieser Steuerung ist es möglich, die Leistung, die eine Windenergieanlage bei gegebenem Wind erzeugt, in Abhängigkeit der Vergütung zu steuern. Auf ein Steuern in Abhängigkeit der Windgeschwindigkeit kann so verzichtet werden. Hierbei liegt der Erfindung folgende Erkenntnis zugrunde. Eine Windenergieanlage unterliegt einem gewissen Maß eines Verschleißes, wobei dieser Verschleiß gerade mit zunehmender Windgeschwindigkeit noch verhältnismäßig stärker zunimmt. Das heißt, die Stromgestehungskosten steigen mit zunehmender Geschwindigkeit, insbesondere dann, wenn von einer festen Gesamtlebensdauer der Windenergieanlage ausgegangen wird. Weiterhin ist gerade bei hohen Windgeschwindigkeiten häufig aufgrund eines hohen Anteils an Windenergie, der in den Netzen bereitgestellt wird, von einer geringeren Vergütung pro kW auszugehen, als bei geringen Windgeschwindigkeiten. Daraus ergibt sich, dass der Gewinn pro kW/h beim Betrieb einer Windenergieanlage, der sich aus Vergütung abzüglich Stromgestehungskosten ergibt, bei hohen Windgeschwindigkeiten wesentlich geringer ist als bei niedrigen Windgeschwindigkeiten.

Durch ein Betreiben der Windenergieanlage, beispielsweise im reduzierten Betrieb bei hohen Windgeschwindigkeiten, bei denen eine geringe Vergütung erfolgt und dies durch das erste Signal mitgeteilt wird, sind die Auswirkungen auf den Gesamtgewinn aus dem Betrieb einer Windenergieanlage vergleichsweise gering. Vielmehr kann durch einen derartig reduzierten Betrieb in derartigen Situationen die Windenergieanlage geschont werden. Dies wirkt sich positiv auf die strukturelle Gesamtbilanz der Beanspruchung aus, sodass in anderen Situationen, nämlich insbesondere wenn eine hohe Vergütung angekündigt wird, diese Reserven genutzt werden können, um beispielsweise die Windenergieanlage trotz struktureller Auslegung für eine geringere Beanspruchung ohne Leistungsreduzierung oder sogar oberhalb einem optimalen Betriebspunkt betreiben zu können.

Insgesamt lassen sich so Windenergieanlagen, die aufgrund ihrer strukturellen Komponentenauslegung an Standorten außerhalb ihrer Auslegungsklassen betrieben werden, wirtschaftlich betreiben. Diese können nämlich einen Standsicherheitsnachweis erhalten, wenn nachgewiesen werden kann, dass regelmäßig die Windenergieanlage mit einer Lastenreduzierung betrieben wird, die abhängig vom ersten Signal ist, und so zu einer gemittelten Ermüdungslast oder Gesamtlebensdauer führt, die ausreichend ist, den Standardsicherheitsnachweis zu erlangen.

Gemäß einer ersten Ausführungsform umfasst das Ansteuern in Abhängigkeit des ersten Signals mit einem Steuersignal ein Ändern des aktuellen Betriebspunktes einer Windenergieanlage und Betreiben der Windenergieanlage mit dem geänderten Betriebspunkt. Dies gilt insbesondere, wenn mit dem ersten Signal die Höhe einer Vergütung von elektrischer Energie für einen aktuellen Zeitpunkt angegeben wird. Gemäß der Erfindung bedeutet das Ansteuern ein Hinterlegen eines Zeitplans mit einer zeitlichen Änderung des Betriebspunktes innerhalb eines vordefinierten Zeitraums oder mehrerer Betriebspunkte für Zeitpunkte es vordefinierten Zeitraums und Betreiben der Windenergieanlage in vom Zeitplan abhängigen Betriebspunkten. Dies gilt insbesondere, wenn mit dem ersten Signal die Höhe einer Vergütung von elektrischer Energie mehrerer zukünftiger Zeitpunkte, insbesondere für einen Zeitraum, bereitgestellt wird. Demnach können dann Betriebspunkte gemäß einem Zeitplan für einen vordefinierten Zeitraum, wobei dieser Zeitraum mit einem Zeitraum übereinstimmt, für den die Höhe einer Vergütung mit dem ersten Signal empfangen wurde, festgelegt werden und die Windenergieanlage in diesem Zeitraum, gemäß dem Zeitplan, betrieben werden.

Ein Betriebspunkt beschreibt hier vorzugsweise einen Satz von Einstellungen oder Einstellwerten, insbesondere Einstellparametern, der der Windenergieanlage vorgegeben wird, um mit diesen Einstellungen betrieben zu werden. Die Einstellwerte oder Einstellparameter sind oder umfassen beispielsweise Werte zum Einstellen des Blattwinkels und/oder Werte zum Einstellen des Erregerfeldes eines fremderregten Generators zur Drehmomentensteuerung und/oder Einstellungen für einen Umrichter und/oder weitere Bauteile einer Einrichtung einer Windenergieanlage zur Einspeisung der vom Generator erzeugten elektrischen Energie in ein Netz.

Gemäß einer weiteren Ausführungsform wird zusätzlich mindestens ein zweites Signal empfangen, das indikativ für mindestens einen Faktor zur Bestimmung der aktuellen Stromgestehungskosten der Windenergieanlage ist. Aktuelle Stromgestehungskosten entsprechen somit betriebspunktabhängigen Stromgestehungskosten. Die Stromgestehungskosten werden auch als Levelized Cost of Electricity oder kurz LCOE bezeichnet. Stromgestehungskosten sind die Kosten, welche für die Energieumwandlung, die von der Windenergieanlage durchgeführt wird, notwendig sind. Faktoren zur Bestimmung der aktuellen Stromgestehungskosten umfassen beispielsweise fixe und variable Betriebskosten.

Mindestens einer der Faktoren ist vorzugsweise ein Lebensdauerverbrauch der Windenergieanlage, das heißt, dass der Windenergieanlage über ihre gesamte Lebensdauer beispielsweise ein Wert einer Gesamtlebensdauer zugeordnet wird, von dem ein Lebensdauerverbrauch während des Betriebs abgezogen, wird und wobei davon ausgegangen wird, dass, wenn dieser Wert bis auf null heruntergezählt wurde, die Lebensdauer der Windenergieanlage aufgebraucht ist. Werden je nach Betriebspunkt unterschiedliche Lebensdauerverbräuche für die Betriebspunkte bestimmt oder vorbestimmt, so kann der Lebensdauerverbrauch bei den Stromgestehungskosten als Faktor berücksichtigt werden.

Zeigt beispielsweise das erste Signal eine besonders hohe Vergütung an, also eine vergleichsweise hohe Vergütung, zeigt jedoch gleichzeitig das zweite Signal einen erhöhten Lebensdauerverbrauch an, so kann beispielsweise trotz der hohen Vergütung unter Berücksichtigung auch des zweiten Signals die Steuerung vorsehen, den Betrieb der Windenergieanlage zu reduzieren bzw. weniger Leistung auszugeben und ein entsprechendes Steuersignal zu erzeugen. Ein Lebensdauerverbrauch wird beispielsweise als Verbrauch von Lebensdauerstundenäquivalenten pro Zeiteinheit oder pro Kilowattstunden angegeben. Beispielsweise ist dann ein Lebensdauerverbrauch mit einem Wert 1 ein normaler Lebensdauerverbrauch, während ein Beispielswert 1,3 des Lebensdauerverbrauchs einen erhöhten Lebensdauerverbrauch angibt. Die Einheit für den Wert ist dann beispielsweise Lebensdauerstundenäquivalent/Stunde oder Lebensdauerstundenäquivalent/Kilowatt.

Ein weiterer Faktor kann zusätzlich eine Restlebensdauer sein, die basierend auf einer Zustandsüberwachung, die auch "Condition Monitoring" genannt wird, oder anderen Messungen bestimmbar ist. Weiterhin kann ein Faktor die Restbetriebszeit sein, die aufgrund der Genehmigungslage, laufenden Projektfinanzierungen oder einer geplanten Anlageabschaltung, zum Beispiel geplantes Repowering, umfasst.

Weiterhin umfasst ein Faktor beispielsweise einen erwarteten Verschleiß, der für unterschiedliche Betriebspunkte erwartet wird. Zudem kann ein Faktor berücksichtigt werden, der die entstehenden Kosten für Netzanschlussleistung der Windenergieanlage in unterschiedlichen Betriebspunkten umfasst. Gemäß dieser Ausführungsform wird das Steuersignal dann in Abhängigkeit vom ersten Signal und vom zweiten Signal erzeugt. Vorzugsweise wird dann beispielsweise ein Steuersignal erzeugt, mit dem die Leistung der Windenergieanlage nur dann erhöht wird, wenn das Verhältnis der Höhe der Vergütung zu den aktuellen Stromgestehungskosten möglichst hoch ist, und die Leistung der Windenergieanlage nur dann reduziert, wenn die Höhe der Vergütung im Verhältnis zu den aktuellen Stromgestehungskosten sehr niedrig ist. Hierdurch wird berücksichtigt, dass eine vergleichsweise höhere Reduzierung der Leistung der Windenergieanlage dann besonders sinnvoll ist, wenn die aktuellen Stromgestehungskosten besonders hoch sind, und umgekehrt.

So kann außerdem, trotz einer geringen vergleichsweisen Vergütung, im Falle, dass die Stromgestehungskosten aufgrund des Betriebspunktes ebenfalls vergleichsweise gering sind, auf eine Leistungsreduzierung verzichtet werden. Gleichzeitig kann im Falle, dass aufgrund des aktuellen Betriebspunkts auch bei vergleichsweise hoher Vergütung vergleichshohe hohe Stromgestehungskosten anfallen, eine Leistungsreduzierung sinnvoll sein.

Gemäß einer weiteren Ausführungsform weist die Windenergieanlage mindestens eine Betriebskennlinie auf. Eine Steuerung der Windenergieanlage stellt dann Betriebspunkte der Windenergieanlage, die auf der Betriebskennlinie liegen, ein. Gemäß der Ausführungsform ist jedoch mindestens ein Bereich der Betriebskennlinie sperrbar. Im Falle einer Sperrung eines Bereichs der Betriebskennlinie können Betriebspunkte in diesem gesperrten Bereich nicht eingestellt werden. Soll demnach ein Betriebspunkt in einem gesperrten Bereich einer Betriebskennlinie aufgrund beispielsweise vorherrschender Windgeschwindigkeiten eingestellt werden, so kann die Steuerung nur einen Betriebspunkt unterhalb des gesperrten Bereichs oder, wenn dieser vorhanden ist, oberhalb des gesperrten Bereichs einstellen. Vorzugsweise wird der Betriebspunkt eingestellt, der im Randbereich des gesperrten Bereichs liegt und einem einzustellenden Punkt am nächsten liegt. Das Sperren und wieder Freigeben mindestens eines Bereichs erfolgt in Abhängigkeit des ersten Signals und vorzugsweise in Abhängigkeit des zweiten Signals. Vorzugsweise wird das Sperren oder Freigeben durch das Steuersignal ausgeführt.

Gemäß einer weiteren Ausführungsform ist die Windenergieanlage mit mindestens zwei unterschiedlichen Betriebskennlinien betreibbar. Die Betriebskennlinien sind vorzugsweise in der Windenergieanlage hinterlegt und umfassen Leistungs-Windgeschwindigkeits-Betriebskennlinien. Das heißt, eine Betriebskennlinie weist im Falle, dass diese eine Leistungs-Windgeschwindigkeits-Betriebskennlinie ist, vorzugsweise Betriebspunkte auf, die jeweils einer Windgeschwindigkeit zugeordnet sind, und in denen jeweils eine bestimmte elektrische Leistung von der Windenergieanlage erzeugt wird. Diese Betriebskennlinien sind vorzugsweise so gewählt, dass eine der Betriebskennlinien einer optimalen Betriebskennlinie mit den optimalen Betriebspunkten entspricht. Eine zweite Betriebskennlinie entspricht ferner einem reduzierten Betrieb, bei dem ein Betrieb mit den Betriebspunkten bei den unterschiedlichen Windgeschwindigkeiten beispielsweise weniger Energie erzeugt als der Betrieb mit den entsprechenden Betriebspunkten auf der optimalen Betriebskennlinie.

Weiterhin ist mindestens ein Schwellenwert hinterlegt oder vordefiniert und im Falle, dass das erste Signal eine Vergütung auf oder oberhalb dem Schwellenwert anzeigt, wird ein Steuersignal erzeugt, um die Windenergieanlage mit der ersten der zwei Betriebskennlinien zu betreiben. Im Falle, dass das erste Signal eine Vergütung unter dem Schwellenwert anzeigt, wird ein Steuersignal erzeugt, um die Windenergieanlage mit einer zweiten der zwei Betriebskennlinien zu betreiben. Besonders bevorzugt kann noch eine dritte oder es können weitere Betriebskennlinien hinterlegt sein, die beispielsweise Betriebspunkte umfassen, die im Vergleich zur ersten Betriebskennlinie Betriebspunkte umfassen, die bei entsprechender Windgeschwindigkeit eine höhere Leistung im Betrieb erzeugen als bei einem Betrieb mit der optimalen Betriebskennlinie. Hierdurch wird die Steuerung der Windenergieanlage besonders vereinfacht.

Gemäß einer weiteren Ausführungsform werden das erste und zweite Signal von einer Zentralsteuerung empfangen. Die Zentralsteuerung ist beispielsweise eine Leitzentrale mehrerer Windenergieanlagen oder eine der Leitzentrale der Windenergieanlagen vorgeschaltete Steuerung. In der Zentralsteuerung werden Steuersignale jeweils für eine von mehreren Windenergieanlagen erzeugt, und an die jeweilige der mehreren Windenergieanlagen übertragen, um die mehreren Windenergieanlagen mit den Steuersignalen so anzusteuern, dass sie eine vom Steuersignal abhängige Leistung erzeugen. Eine übergeordnete Stelle kann demnach in Abhängigkeit der vorherrschenden Vergütung, die diese übergeordnete Stelle mittels des ersten Signals kennt, bestimmen, welche der ansteuerbaren Windenergieanlagen beispielsweise reduziert betrieben werden soll oder kann, und welche der ansteuerbaren Windenergieanlagen beispielsweise weiter im optimalen Betriebspunkt betrieben wird.

Gemäß einer weiteren Ausführungsform wird ein zweites Signal in jeder der Windenergieanlagen jeweils erzeugt und an die Zentralsteuerung übertragen. Alternativ oder zusätzlich wird zumindest ein Faktor zur Bestimmung der aktuellen Stromgestehungskosten einer Windenergieanlage von der Windenergieanlage an die Zentralsteuerung übertragen, um so mit der Zentralsteuerung selbst das zweite Signal für die Windenergieanlage zu erzeugen.

Gemäß der Ausführungsform kann die Zentralsteuerung entscheiden, welche von mehreren Windenergieanlagen beispielsweise geschont werden soll, also beispielsweise in Abhängigkeit einer vergleichsweisen geringen Vergütung eine vergleichsweise geringere Leistung erzeugen soll, und somit in einem gedrosselten Modus betrieben wird. Windenergieanlagen, die beispielsweise ohnehin kurz vor ihrem Laufzeitende stehen und noch eine ausreichende Lebensdauer gemäß einer Lebensdauerverbrauchsanzeige aufweisen, können so beispielsweise stärker beansprucht werden als andere Windenergieanlagen.

Gemäß einer weiteren Ausführungsform werden von der Zentralsteuerung Steuersignale derart erzeugt, dass eine Windenergieanlage mit aktuell geringen Stromgestehungskosten im Vergleich zu einer anderen Windenergieanlage eine höhere Leistung erzeugt, als die andere Windenergieanlage.

Gemäß einer weiteren Ausführungsform wird alternativ zum vorher beschriebenen Empfang des ersten Signals durch die Zentralsteuerung zur Erzeugung der Steuersignale in der Zentralsteuerung das erste Signal mittels der Windenergieanlage empfangen. Das zweite Signal wird von einer Auswerteschaltung der Windenergieanlage generiert und dann mit der Windenergieanlage selbst Steuersignale erzeugt, um sich selbst derart anzusteuern, dass sie eine vom jeweiligen Steuersignal abhängige Leistung erzeugt. Eine übergeordnete Zentralsteuerung ist somit nicht nötig.

Gemäß einer weiteren Ausführungsform wird das Steuersignal derart erzeugt, dass ein Betriebspunkt nach einer Änderung, vorzugsweise für einen vordefinierten Zeitraum von mindestens einer Stunde, mindestens 30 Minuten oder mindestens 10 Minuten, insbesondere 15 Minuten, beibehalten wird, auch wenn sich das erste Signal innerhalb des Zeitraums ändert. Hierdurch wird verhindert, dass trotz schwankender Vergütungshöhen ständig der Betriebspunkt einer Windenergieanlage geändert wird.

Gemäß einer weiteren Ausführungsform wird das Steuersignal derart erzeugt, dass sich ein Betriebspunkt nur dann ändert, wenn sich das erste Signal um mehr als einen vordefinierten zweiten Schwellenwert ändert. Auch hier wird berücksichtigt, dass nicht ständig der Betriebspunkt der Windenergieanlage trotz konstanten Windverhältnissen geändert werden muss.

Gemäß einer weiteren Ausführungsform wird ein drittes Signal entweder von der Zentralsteuerung oder von der Windenergieanlage selbst empfangen, das indikativ für eine Wetterprognose ist. Ein Steuersignal wird dann in Abhängigkeit des ersten Signals, des zweiten Signals und des dritten Signals erzeugt. So wird berücksichtigt, dass keine Zeitpläne aufgrund des ersten Signals für Windenergieanlagen hinterlegt werden, die beispielsweise aufgrund der vorherrschenden Windverhältnisse nicht eingehalten werden können.

Weiterhin betrifft die Erfindung eine Windenergieanlage, die eingerichtet ist, ein Verfahren nach einer der vorgenannten Ausführungsformen auszuführen. Insbesondere ist die Windenergieanlage eingerichtet, ein Steuersignal zu erzeugen oder zum empfangen, das abhängig von einem ersten Signal ist. Hierbei ist das erste Signal, wie bereits oben ausgeführt, indikativ für eine Höhe einer Vergütung von elektrischer Energie, die aktuell und/oder zukünftig in ein Netz, mit dem die Windenergieanlage verbindbar ist, eingespeist wird. Außerdem ist die Windenergieanlage eingerichtet, eine vom Steuersignal abhängige Leistung zu erzeugen.

Weiterhin betrifft die Erfindung eine Zentralsteuerung, die eingerichtet ist, ein Verfahren nach einem der vorgenannten Ausführungsformen auszuführen. Insbesondere dient die Zentralsteuerung zum Erzeugen von Steuersignalen für mehrere Windenergieanlagen gemäß der vorgenannten Ausführungsform. Mit der Zentralsteuerung wird ein erstes Signal empfangen, das indikativ für eine Höhe einer Vergütung von elektrischer Energie ist, die aktuell und/oder zukünftig in ein Netz, mit dem die Windenergieanlagen jeweils verbunden sind, eingespeist wird. Außerdem ist die Zentralsteuerung eingerichtet, die Windenergieanlagen jeweils mit einem von dem ersten Signal abhängigen Steuersignal anzusteuern.

Weiterhin umfasst die Erfindung ein System mit einer Zentralsteuerung nach einer der vorgenannten Ausführungsformen sowie einer Windenergieanlage nach einer der vorgenannten Ausführungsformen.

Weitere Ausführungsformen ergeben sich anhand der in den Figuren näher erläuterten Ausführungsbeispielen.
- Fig. 1: zeigt eine Windenergieanlage,
- Fig. 2: mehrere Windenergieanlagen, die mit einer Zentralsteuerung verbunden sind,
- Fig. 3: mehrere Betriebskennlinien einer Windenergieanlage,
- Fig. 4: die Steuerung einer Windenergieanlage, und
- Fig. 5: die Schritte des Verfahrens gemäß einem Ausführungsbeispiel.

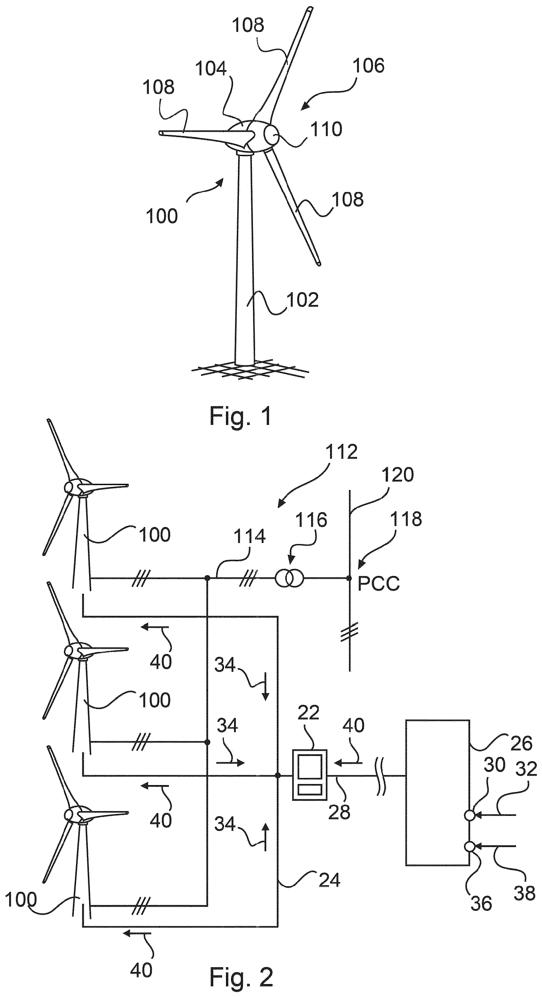

Fig. 1 zeigte eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz, oder kurz Netz 120 genannt, einzuspeisen.

Weiter ist jeder der Windenergieanlagen 100 mit einem Windparkregler 22 über eine Datenleitung 24 verbunden. Zwischen den Windenergieanlagen 100 und dem Windparkregler 22 können über die Datenleitung 24 Daten in beiden Richtungen, also von der Windenergieanlage 100 zum Windparkregler 22 und vom Windparkregler 22 zur Windenergieanlage 100, übertragen werden. Der Windparkregler 22 ist wiederum mit einer Zentralsteuerung 26 über eine weitere Datenleitung 28 verbunden.

Die Zentralsteuerung 26 ist vorliegend in Fig. 2 nur mit dem dargestellten Windpark 112 verbunden, wobei vorzugsweise die Zentralsteuerung 26 mit einer Vielzahl von Windparks 112 verbunden ist und diese steuert. Auch über die weitere Datenleitung 28 kann die Zentralsteuerung 26 Daten an den Windparkregler 22 und der Windparkregler 22 Daten an die Zentralsteuerung 26, also in beiden Richtungen, nämlich bidirektional, übertragen. Die Zentralsteuerung 26 weist außerdem einen ersten Eingang 30 auf, dem ein erstes Signal 32 oder mehrere erste Signale 32 zugeführt werden. Das erste Signal 32 zeigt die Höhe einer Vergütung von elektrischer Energie an, die aktuell und/oder zukünftig in das Netz 120, mit dem die Windenergieanlagen 100 verbunden sind, eingespeist wird. Mehrere erste Signale 32 dienen beispielsweise zur Anzeige der jeweiligen Vergütung der Energie, wenn von der Zentralsteuerung 26 mehrere Windparks 112 angesteuert werden, die beispielsweise mit unterschiedlichen Netzen 120 verbunden sind. Hier ist dann jedes erste Signal 32 für die Windenergieanlagen 100 des jeweiligen Windparks 112 vorgesehen.

Weiterhin ist die Zentralsteuerung 26 eingerichtet, um von jeder der Windenergieanlagen 100 des dargestellten Windparks 112 ein zweites Signal 34 über die Datenleitung 24 sowie die weitere Datenleitung 28, also weitergeleitet über den Windparkregler 22, zu empfangen, das indikativ für mindestens einen Faktor zur Bestimmung der aktuellen Stromgestehungskosten der jeweiligen Windenergieanlage 100 ist. Außerdem weist die Zentralsteuerung 26 einen weiteren Eingang 36 auf, über den ein drittes Signal 38 empfangbar ist. Das dritte Signal 38 ist indikativ für eine Wetterprognose. Vorzugsweise beinhaltet ein drittes Signal 38 mehrere Wetterprognosen für verschiedene Bereiche, in denen im Falle, dass mehrere Windparks 112 mit der Zentralsteuerung 26 verbunden sind, lokalisiert sind. Es kann jedoch auch für jeden Windpark 112 abhängig von seinem Standort ein eigenes drittes Signal 38 empfangen werden. Alternativ zum dargestellten Ausführungsbeispiel können der erste Eingang 30 und der weitere Eingang 36 auch als ein einzelner Eingang ausgebildet sein.

Die Zentralsteuerung 26, die dabei auch als Leitzentrale ausgebildet sein kann, aber auch als ein Teil der Parksteuerung als dezentralisiertes System, ist eingerichtet, in Abhängigkeit vom ersten Signal 32 oder in Abhängigkeit vom ersten Signal 32 und dem zweiten Signal 34 oder in Abhängigkeit vom ersten Signal 32 und vom zweiten Signal 34 und dem dritten Signal 38 oder in Abhängigkeit vom ersten Signal 32 und vom dritten Signal 38, ein Steuersignal 40 zum Ansteuern aller Windenergieanlagen 100 des Windparks 112 oder jede der Windenergieanlagen 100 separat zu erzeugen und dann auszugeben. Das Steuersignal 40 oder die Steuersignale 40 werden dann entsprechend über die weitere Datenleitung 28 sowie die Datenleitung 24, also wieder über den Windparkregler 22, denen oder jeweils einer der entsprechenden Windenergieanlage 100 zugeführt. Das Steuersignal 40 dient zum Ansteuern der Windenergieanlage, sodass die Windenergieanlage Energie erzeugt, die abhängig vom Steuersignal ist. Vorzugsweise dient das Steuersignal 40 zum Ansteuern einer oder mehrerer Windenergieanlagen 100 durch Einstellen eines vom Steuersignal 40 abhängigen Betriebspunktes der Windenergieanlage 100 oder Windenergieanlagen 100, sodass also ein aktueller Betriebspunkt der Windenergieanlage 100 oder Windenergieanlagen 100 in einem vom Steuersignal 40 abhängigen anderen Betriebspunkt wechselt. Ein Betriebspunkt definiert beispielsweise einen Blatteinstellwinkel oder eine Blattwinkeländerung und/oder eine Steuerung der Erregerspannung des Generators der Windenergieanlage 100. So kann in Abhängigkeit des Steuersignals 40, nämlich insbesondere durch Verändern des Betriebspunkts, auch bei gleichbleibendem Wind, die elektrische Energie, die mit der Windenergieanlage 100 erzeugt wird, geändert werden. Die Windenergieanlagen 100 des Windparks 112 werden somit insbesondere in Abhängigkeit des ersten Signals 32, also in Abhängigkeit der Höhe einer Vergütung, gesteuert.

In einem hier nicht dargestellten Ausführungsbeispiel werden die oben genannten Funktionen der Zentralsteuerung 26 im Windparkregler 22 ausgeführt. Hierzu weist der Windparkregler 22 Eingänge auf, um das erste Signal 32 und insbesondere das zweite Signal 34 zu empfangen oder selbst für die durch den Windparkregler 22 angesteuerten Windenergieanlagen 100 zu erzeugen. Der Windparkregler 22 erzeugt dann Steuersignale 40 für die Windenergieanlagen 100 in Abhängigkeit des ersten Signals 32 und vorzugsweise in Abhängigkeit des zweiten Signals 34.

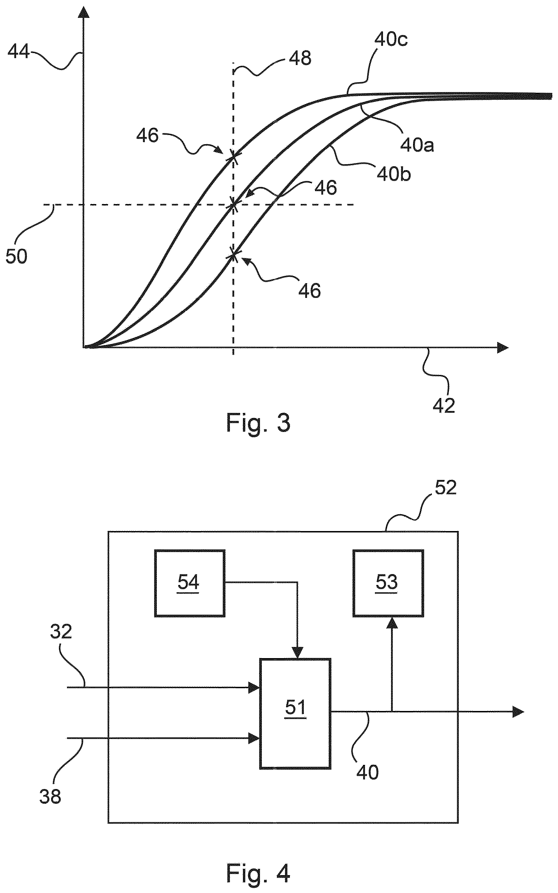

Fig. 3 zeigt drei Betriebskennlinien 40a, 40b, 40c. Die Betriebskennlinien 40a, 40b, 40c ordnen einer Windgeschwindigkeit 42 jeweils eine Leistung 44 zu. Jede der Betriebskennlinien 40a bis 40c umfasst eine Vielzahl von Betriebspunkten 46. Das heißt, dass die Windenergieanlage, die beispielsweise mit einer optimalen Betriebskennlinie 40a betrieben wird, bei einer Windgeschwindigkeit 42, die durch die senkrechte strichlierte Linie 48 dargestellt ist, eine Leistung 50 erzeugt, was durch die waagerechte strichlierte Linie 50 gezeigt ist.

Im Betriebspunkt 46, der auf der optimalen Betriebskennlinie 40a dargestellt ist, sind entsprechend für den Betriebspunkt vordefinierte Blatteinstellwinkel und/oder Erregerfeldeinstellungen hinterlegt. Von diesem Betriebspunkt 46 auf der Betriebskennlinie 40a, die auch als erste Betriebskennlinie bezeichnet werden kann, kann beispielsweise auf einen weiteren Betriebspunkt 46 auf der weiteren oder zweiten Betriebskennlinie 40b umgeschaltet werden. Der Betriebspunkt 46, der auf der Betriebskennlinie 40b liegt, weist beispielsweise einen anderen Blatteinstellwinkel oder eine andere Einstellung für das Erregerfeld auf.

So kann in Abhängigkeit des ersten Signals, das die Höhe der Vergütung angibt, einfach zwischen den Betriebspunkten 46 auf den Betriebskennlinien 40a bis 40c umgeschaltet werden. Im vorliegenden Beispiel sind drei Betriebskennlinien dargestellt, wobei gemäß einem anderen Ausführungsbeispiel eine Vielzahl von Betriebskennlinien hinterlegt ist, die jeweils einer Vergütungshöhe zugeordnet ist, und in Abhängigkeit einer Vergütungshöhe, die durch das erste Signal angezeigt wird, ausgewählt werden kann. Alternativ gemäß einem weiteren hier nicht dargestellten Ausführungsbeispiel ist nur mindestens eine Betriebskennlinie 40a hinterlegt, wobei Bereiche der Betriebskennlinie 40a höherer Leistung deaktivierbar oder sperrbar sind oder eine Leistungsbegrenzung aktivierbar ist. In dem Fall sind nicht mehrere Kennlinien hinterlegt, sondern die Kennlinie wird in mehrere Bereiche geteilt, wobei die Bereiche höherer Leistung optional sind und in Abhängigkeit des ersten Signals 32 zu- oder abschaltbar oder sperrbar und wieder freigebbar sind.

Fig. 4 zeigt eine Steuerung 52 einer Windenergieanlage, die beispielsweise unabhängig von einer Zentralsteuerung 26 gemäß dem Verfahren gesteuert wird. Die Steuerung 52 empfängt das erste Signal 32, das die Höhe einer Vergütung anzeigt sowie optional das dritte Signal 38, das Wetterprognosedaten enthält. Außerdem umfasst die Steuerung 52 eine Auswerteschaltung 54, die das zweite Signal 34 erzeugt. In Abhängigkeit der drei Signale wird dann mit einer Steuersignalerzeugungseinheit 51 der Steuerung 52 ein Steuersignal 40 zum Ansteuern der Windenergieanlage erzeugt. Dieses Steuersignal 40 kann beispielsweise in der Steuerung 42 unmittelbar in einer Betriebspunkteinstelleinheit 53 verwendet werden, um die Leistung der Windenergieanlage bei gegebenem Wind, nämlich durch Wahl eines Betriebspunktes 46, zu steuern.

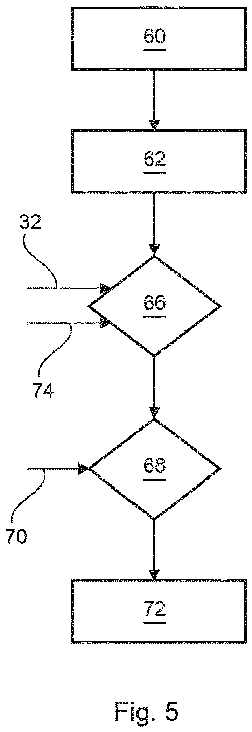

Fig. 5 zeigt die Schritte eines Ausführungsbeispiels des Verfahrens. In einem Schritt 60 befindet sich die Windenergieanlage in einem aktuellen Betriebspunkt 46. Nach einer Verzögerungszeit 62, der ein Zeitraum 64 zuführbar ist, wird in einem Entscheidungsschritt 66 geprüft, ob sich ein zugeführtes erstes Signal 32 geändert hat. Hat sich das erste Signal 32 nicht geändert, so geht das Verfahren wieder in Schritt 60 über und die Windenergieanlage 100 wird weiter im aktuellen Betriebspunkt 46 betrieben. Hat sich das erste Signal 32 geändert, wird in einem nächsten Entscheidungsschritt 68 geprüft, ob die Änderung des ersten Signals 32 sich um mehr als einen zweiten Schwellenwert 70 geändert hat. Ist dies nicht der Fall, so wird wiederum die Windenergieanlage weiter im aktuellen Betriebspunkt 46 betrieben. Hat sich jedoch das erste Signal 32 um mehr als den zweiten Schwellenwert 70 geändert, so wird die Windenergieanlage 100 so angesteuert, dass die Windenergieanlage 100 mit einem anderen Betriebspunkt im Schritt 72 betrieben wird.

Alternativ kann bei der Prüfung im Schritt 66 zusätzlich ein Schwellenwert 74 hinzugefügt werden. Eine Änderung des ersten Signals 32 wird nur dann detektiert, wenn sich das erste Signal 32 so geändert hat, dass es den Schwellenwert 74 einmal, entweder von einem unteren Wert zu einem oberen Wert oder von einem oberen Wert zu einem unteren Wert, überschritten hat.

## Patentansprüche

1. Verfahren zum Betreiben mindestens einer Windenergieanlage (100), umfassend die Schritte:
- Empfangen eines ersten Signals (32), das indikativ für eine Höhe einer Vergütung von elektrischer Energie ist, die zukünftig in ein Netz (120), mit dem die Windenergieanlage (100) verbunden ist, eingespeist wird, wobei das erste Signal die Höhe der Vergütung von elektrischer Energie für mehrere zukünftige Zeitpunkte für einen Zeitraum angibt,
- Erzeugen eines vom ersten Signal (32) abhängigen Steuersignals (40) und
- Ansteuern der Windenergieanlage (100) mit dem Steuersignal (40) zum Erzeugen einer von dem Steuersignal (40) abhängigen Leistung der Windenergieanlage (100), wobei das Ansteuern ein Hinterlegen eines Zeitplans mit zeitlicher Änderung des Betriebspunktes (46) für einen vordefinierten Zeitraum und Betreiben der Windenergieanlage (100) in vom Zeitplan abhängigen Betriebspunkten (46) umfasst, wobei der vordefinierte Zeitraum mit dem Zeitraum übereinstimmt, für den die Höhe der Vergütung mit dem ersten Signal empfangen wurde.

2. Verfahren nach Anspruch 1, wobei das Ansteuern ein Ändern des aktuellen Betriebspunktes (46) und Betreiben der Windenergieanlage (100) mit dem geänderten Betriebspunkt (46) umfasst.

3. Verfahren nach Anspruch 1 oder 2, wobei ferner mindestens ein zweites Signal (34) empfangen wird, das indikativ für mindestens einen Faktor zur Bestimmung der aktuellen Stromgestehungskosten (LCOE) der Windenergieanlage (100) ist, wobei der mindestens eine Faktor insbesondere einen Lebensdauerverbrauch, Restlebensdauer und/oder Restbetriebszeit, der Windenergieanlage (100), einen für unterschiedliche Betriebspunkte (46) jeweils erwarteten Verschleiß der Windenergieanlage (100) und/oder für unterschiedliche Betriebspunkte (46) jeweils entstehende Kosten für Netzanschlussleistung der Windenergieanlage (100) umfassen, und Erzeugen des Steuersignals (40) in Abhängigkeit vom ersten Signal (32) und zweiten Signal (34).

4. Verfahren nach einem der vorhergehenden Ansprüche, wobei die Windenergieanlage (100) mit mindestens zwei unterschiedlichen Betriebskennlinien (40a, 40b, 40c), insbesondere Leistungs-Windgeschwindigkeits-Betriebskennlinien, betreibbar ist und mindestens ein Schwellenwert (74) für die Windenergieanlage (100) vordefinierbar ist, wobei im Falle, dass das erste Signal (32) eine Vergütung auf oder oberhalb dem Schwellenwert (74) anzeigt, ein Steuersignal (40) erzeugt wird, um die Windenergieanlage (100) mit einer ersten (40a) der zwei Betriebskennlinien (40a-40c) zu betreiben, und im Falle, dass das erste Signal (32) eine Vergütung unter dem Schwellenwert (74) anzeigt, ein Steuersignal (40) erzeugt wird, um die Windenergieanlage (100) mit einer zweiten (40b) der zwei Betriebskennlinien (40a-40c) zu betreiben.

5. Verfahren nach einem der Ansprüche 1 bis 3, wobei die Windenergieanlage (100) mindestens eine Betriebskennlinie (40a) aufweist und Betriebspunkte (46) der Betriebskennlinie (40a) von einer Steuerung (52) eingestellt werden, wobei mindestens ein Bereich der Betriebskennlinie (40a) sperrbar ist, sodass im Falle einer Sperrung Betriebspunkte (46) in dem gesperrten Bereich nicht einstellbar sind, wobei das Sperren und wieder Freigeben in Abhängigkeit vom ersten Signal (32) und vorzugsweise in Abhängigkeit vom zweiten Signal (34) erfolgt.

6. Verfahren nach einem der vorhergehenden Ansprüche, wobei das erste Signal (32) und das zweite Signal (34) von einer Zentralsteuerung (26) empfangen werden und in der Zentralsteuerung (26) Steuersignale (40) jeweils für eine von mehreren Windenergieanlagen (100) erzeugt und an die jeweiligen der mehreren Windenergieanlagen (100) übertragen werden, um die mehreren Windenergieanlagen (100) mit den Steuersignalen (40) jeweils so anzusteuern, dass sie eine vom jeweiligen Steuersignal (40) abhängige Leistung erzeugen.

7. Verfahren nach Anspruch 6, wobei das zweite Signal (34) in der Windenergieanlage (100) erzeugt und an die Zentralsteuerung (26) übertragen wird oder zumindest ein Faktor zur Bestimmung der aktuellen Stromgestehungskosten einer Windenergieanlage (100) von der Windenergieanlage (100) an die Zentralsteuerung (26) übertragen wird, um mit der Zentralsteuerung (26) das zweite Signal (34) für die Windenergieanlage (100) zu erzeugen.

8. Verfahren nach Anspruch 6 oder 7, wobei die Steuersignale (40) in der Zentralsteuerung (26) derart erzeugt werden, dass eine Windenergieanlage (100) mit aktuell geringeren Stromgestehungskosten im Vergleich zu einer anderen Windenergieanlage (100) eine höhere Leistung erzeugt als die andere Windenergieanlage (100).

9. Verfahren nach einem der Ansprüche 1 bis 5, wobei das erste Signal (32) mittels der Windenergieanlage (100) empfangen und das zweite Signal (34) von einer Auswerteschaltung (54) der Windenergieanlage (100) generiert wird und die Windenergieanlage (100) Steuersignale (40) erzeugt, um sich selbst derart anzusteuern, dass sie eine vom jeweiligen Steuersignal (40) abhängige Leistung erzeugt.

10. Verfahren nach einem der vorhergehenden Ansprüche, wobei das Steuersignal (40) derart erzeugt wird, dass ein Betriebspunkt (46) nach einer Änderung, vorzugsweise für einen Zeitraum (64) von mindestens einer Stunde, mindestens 30 Minuten oder mindestens 10 Minuten, insbesondere 15 Minuten, beibehalten wird, auch wenn sich das erste Signal (32) innerhalb des Zeitraums (64) ändert.

11. Verfahren nach einem der vorhergehenden Ansprüche, wobei das Steuersignal (40) derart erzeugt wird, dass ein Betriebspunkt (46) sich nur dann ändert, wenn sich das erste Signal (32) um mehr als einen vordefinierten zweiten Schwellenwert (70) ändert.

12. Verfahren nach einem der vorhergehenden Ansprüche, wobei ein drittes Signal (38) empfangen wird, das indikativ für eine Wetterprognose ist, und ein Steuersignal (40) in Abhängigkeit des ersten Signals (32), des zweiten Signals (34) und des dritten Signals (38) erzeugt wird.

13. Windenergieanlage zum Ausführen eines Verfahrens nach einem der Ansprüche 1 bis 12, wobei die Windenergieanlage (100) eingerichtet ist, ein Steuersignal (40) zu erzeugen oder zu empfangen, das abhängig von einem ersten Signal (32) ist, das indikativ für eine Höhe einer Vergütung von elektrischer Energie ist, die aktuell und/oder zukünftig in ein Netz (120), mit dem die Windenergieanlage (100) verbindbar ist, eingespeist wird, wobei das erste Signal die Höhe der Vergütung von elektrischer Energie für mehrere zukünftige Zeitpunkte für einen Zeitraum angibt, und eingerichtet ist, eine vom Steuersignal (40) abhängige Leistung zu erzeugen, indem die Windenergieanlage (100) mit dem Steuersignal (40) zum Erzeugen der Leistung angesteuert wird, wobei das Ansteuern ein Hinterlegen eines Zeitplans mit zeitlicher Änderung des Betriebspunktes (46) für einen vordefinierten Zeitraum und Betreiben der Windenergieanlage (100) in vom Zeitplan abhängigen Betriebspunkten (46) umfasst, wobei der vordefinierte Zeitraum mit dem Zeitraum übereinstimmt, für den die Höhe der Vergütung mit dem ersten Signal empfangen wurde.

14. Zentralsteuerung, insbesondere zum Ausführen eines Verfahrens nach einem der Ansprüche 1 bis 12, zum Erzeugen von Steuersignalen (40) für mehrere Windenergieanlagen (100) nach Anspruch 13, wobei mit der Zentralsteuerung (26) ein erstes Signal (32) empfangen wird, das indikativ für eine Höhe einer Vergütung von elektrischer Energie ist, die zukünftig in ein Netz (120), mit dem die Windenergieanlagen (100) jeweils verbunden sind, eingespeist wird, wobei das erste Signal die Höhe der Vergütung von elektrischer Energie für mehrere zukünftige Zeitpunkte für einen Zeitraum angibt, und Ansteuern der Windenergieanlagen (100) jeweils mit einem von dem ersten Signal (32) abhängigen Steuersignal (40), wobei das Ansteuern ein Hinterlegen eines Zeitplans mit zeitlicher Änderung des Betriebspunktes (46) für einen vordefinierten Zeitraum und Betreiben der Windenergieanlage (100) in vom Zeitplan abhängigen Betriebspunkten (46) umfasst, wobei der vordefinierte Zeitraum mit dem Zeitraum übereinstimmt, für den die Höhe der Vergütung mit dem ersten Signal empfangen wurde.

15. System mit einer Zentralsteuerung (26) nach Anspruch 14 und mehreren Windenergieanlagen (100) nach Anspruch 13.

## Claims

1. A method of operating at least one wind turbine (100) including the steps:
- receiving a first signal (32) which is indicative of a level of a remuneration for electrical energy, which is fed in the future into a grid (120) to which the wind turbine (100) is connected, wherein the first signal indicates the level of remuneration for electrical energy for a plurality of future points in time for a period of time,
- producing a control signal (40) dependent on the first signal (32), and
- controlling the wind turbine (100) with the control signal (40) for generating power of the wind turbine (100), that is dependent on the control signal (40), wherein the control comprises storing a schedule with a change in respect of time of the operating point (46) for a pre-defined period of time and operating the wind turbine (100) in operating points (46) which are dependent on the schedule, wherein the pre-defined period of time coincides with the period of time, for which the level of remuneration was received.

2. A method as set forth in claim 1 wherein the control includes a change in the current operating point (46) and operating the wind turbine (100) with the changed operating point (46).

3. A method as set forth in claim 1 or claim 2 wherein in addition at least one second signal (34) is received, which is indicative of at least one factor for determining the current electricity generation costs (LCOE) of the wind turbine (100), wherein the at least one factor includes in particular a lifetime consumption, a residual lifetime and/or a residual operating time, of the wind turbine (100), a wear of the wind turbine (100) respectively expected for different operating points (46) and/or costs respectively occurring for different operating points (46) for grid connection power of the wind turbine (100) and producing the control signal (40) in dependence on the first signal (32) and the second signal (34).

4. A method as set forth in one of the preceding claims wherein the wind turbine (100) is operable with at least two different operating characteristics (40a, 40b, 40c), in particular power-wind speed operating characteristics, and at least one threshold value (74) for the wind turbine (100) can be pre-defined, wherein in the situation where the first signal (32) indicates a remuneration at or above the threshold value (74) a control signal (40) is produced to operate the wind turbine (100) with a first (40a) of the two operating characteristics (40a - 40c) and in case where the first signal (32) indicates a remuneration below the threshold value (74) a control signal (40) is produced to operate the wind turbine (100) at a second (40b) of the two operating characteristics (40a - 40c).

5. A method as set forth in one of claims 1 through 3 wherein the wind turbine (100) has at least one operating characteristic (40a) and operating points (46) of the operating characteristic (40a) are set by a control (52), wherein at least one region of the operating characteristic (40a) can be blocked so that in the case of a blockage operating points (46) in the blocked region cannot be set, wherein blocking and re-enablement is effected in dependence on the first signal (32) and preferably in dependence on the second signal (34).

6. A method as set forth in one of the preceding claims wherein the first signal (32) and the second signal (34) are received by a second control (26) and in the central control (26) control signals (40) are respectively produced for one of a plurality of wind turbines (100) and transmitted to the respective ones of the plurality of wind turbines (100) in order to respectively control the plurality of wind turbines (100) with the control signals (40) such that they generate a power dependent on the respective control signal (40).

7. A method as set forth in claim 6 wherein the second signal (34) is produced in the wind turbine (100) and transmitted to the central control (26) or at least one factor for determining the current electricity generation costs of a wind turbine (100) is transmitted from the wind turbine (100) to the central control (26) to produce with the central control (26) the second signal (34) for the wind turbine (100).

8. A method as set forth in claim 6 or claim 7 wherein the control signals (40) are produced in the central control (26) in such a way that a wind turbine (100) with currently lower electricity generation costs in comparison with another wind turbine (100) generates a higher power output than the other wind turbine (100).

9. A method as set forth in one of claims 1 through 5 wherein the first signal (32) is received by means of the wind turbine (100) and the second signal (34) is generated by an evaluation circuit (54) of the wind turbine (100) and the wind turbine (100) produces control signals in order to control itself such that it produces a power output dependent on the respective control signal (40).

10. A method as set forth in one of the preceding claims wherein the control signal (40) is produced in such a way that an operating point (46) is maintained after a change, preferably for a period of time (64) of at least one hour, at least 30 minutes or at least 10 minutes, in particular 15 minutes, even if the first signal (32) changes within the period of time (64).

11. A method as set forth in one of the preceding claims wherein the control signal (40) is produced in such a way that an operating point (46) changes only when the first signal (32) changes by more than a pre-defined second threshold value (70).

12. A method as set forth in one of the preceding claims wherein a third signal (38) is received, which in indicative of a weather forecast, and a control signal (40) is produced in dependence on the first signal (32), the second signal (34) and the third signal (38).

13. A wind turbine for carrying out a method as set forth in one of claims 1 through 12, wherein the wind turbine (100) is adapted to produce or receive a control signal (40) which is dependent on a first signal (32) which is indicative of a level of a remuneration for electrical energy which is fed currently and/or in the future into a grid (120) to which the wind turbine (100) can be connected, wherein the first signal indicates the level of remuneration for electrical energy for a plurality of future points in time for a period of time, and is adapted to generate a power output dependent on the control signal (40) by controlling the wind turbine (100) with the control signal (40) to generate a power output, wherein the control comprises storing a schedule with a change in respect of time of the operating point (46) for a pre-defined period of time and operating the wind turbine (100) in operating points (46) which are dependent on the schedule, wherein the pre-defined period of time coincides with the period of time, for which the level of remuneration was received.

14. A central control, in particular for carrying out a method as set forth in one of claims 1 through 12, for producing control signals (40) for a plurality of wind turbines (100) as set forth in claim 13, wherein with the central control (26) a first signal (32) is received, which is indicative of a level of a remuneration for electrical energy which is fed in the future into a grid (120) to which the wind turbines (100) are respectively connected, wherein the first signal indicates the level of remuneration for electrical energy for a plurality of future points in time for a period of time, and control of the wind turbines (100) with a respective control signal (40) dependent on the first signal (32), wherein the control comprises storing a schedule with a change in respect of time of the operating point (46) for a pre-defined period of time and operating the wind turbine (100) in operating points (46) which are dependent on the schedule, wherein the pre-defined period of time coincides with the period of time, for which the level of remuneration was received.

15. A system comprising a central control (26) as set forth in claim 14 and a plurality of wind turbines (100) as set forth in claim 13.

## Revendications

1. Procédé destiné à faire fonctionner au moins une éolienne (100), comprenant les étapes :
- de réception d'un premier signal (32), qui indique un niveau de rémunération d'énergie électrique qui est injectée à l'avenir dans un réseau (120) auquel l'éolienne (100) est connectée, dans lequel le premier signal indique le niveau de rémunération d'énergie électrique pour plusieurs moments futurs sur une période,
- de génération d'un signal de commande (40) dépendant du premier signal (32) et
- de pilotage de l'éolienne (100) avec le signal de commande (40) pour générer une puissance de l'éolienne (100) dépendant du signal de commande (40), dans lequel le pilotage comprend un enregistrement d'un calendrier avec modification temporelle du point de fonctionnement (46) pour une période prédéfinie et le fonctionnement de l'éolienne (100) dans des points de fonctionnement (46) dépendant du calendrier, dans lequel la période prédéfinie coïncide avec la période pour laquelle le niveau de rémunération a été reçu avec le premier signal.

2. Procédé selon la revendication 1, dans lequel le pilotage comprend une modification du point de fonctionnement actuel (46) et le fonctionnement de l'éolienne (100) avec le point de fonctionnement modifié (46).

3. Procédé selon la revendication 1 ou 2, dans lequel au moins un deuxième signal (34) est en outre reçu, qui indique au moins un facteur de détermination du coût actuel de revient du courant (LCOE) de l'éolienne (100), dans lequel l'au moins un facteur comprend en particulier une consommation de durée de vie, une durée de vie restante et/ou un temps de fonctionnement restant, de l'éolienne (100), une usure attendue de l'éolienne (100) pour différents points de fonctionnement (46) respectivement et/ou des coûts de puissance de raccordement au réseau de l'éolienne (100) résultant respectivement pour différents points de fonctionnement (46), et le signal de commande (40) est généré en fonction du premier signal (32) et du deuxième signal (34).

4. Procédé selon l'une quelconque des revendications précédentes, dans lequel l'éolienne (100) peut fonctionner avec au moins deux courbes caractéristiques de fonctionnement différentes (40a, 40b, 40c), en particulier des courbes caractéristiques particulières de fonctionnement puissance-vitesse du vent et au moins une valeur de seuil (74) peut être prédéfinie pour l'éolienne (100), dans lequel, si le premier signal (32) indique une compensation égale ou supérieure à la valeur de seuil (74), un signal de commande (40) est généré, pour faire fonctionner l'éolienne (100) avec une première (40a) des deux courbes caractéristiques de fonctionnement (40a-40c), et, si le premier signal (32) indique une compensation inférieure à la valeur de seuil (74), un signal de commande (40) est généré pour faire fonctionner l'éolienne (100) avec une deuxième (40b) des deux courbes caractéristiques de fonctionnement (40a-40c).

5. Procédé selon l'une quelconque des revendications 1 à 3, dans lequel l'éolienne (100) présente au moins une courbe caractéristique de fonctionnement (40a) et des points de fonctionnement (46) de la courbe caractéristique de fonctionnement (40a) sont réglés par une commande (52), dans lequel au moins une zone de la courbe caractéristique de fonctionnement (40a) est verrouillable, de sorte que, en cas de blocage, des points de fonctionnement (46) dans la zone bloquée ne peuvent pas être réglés, dans lequel le blocage et la libération sont effectués en fonction du premier signal (32) et de préférence en fonction du deuxième signal (34).

6. Procédé selon l'une quelconque des revendications précédentes, dans lequel le premier signal (32) et le deuxième signal (34) sont reçus par une commande centrale (26) et, dans la commande centrale (26), des signaux de commande (40) sont respectivement générés pour l'une parmi plusieurs éoliennes (100) et sont transmis aux éoliennes respectives parmi les plusieurs éoliennes (100) pour piloter les plusieurs éoliennes (100) avec les signaux de commande (40) de telle sorte qu'elles génèrent une puissance dépendant du signal de commande (40) respectif.

7. Procédé selon la revendication 6, dans lequel le deuxième signal (34) est généré dans l'éolienne (100) et est transmis à la commande centrale (26) ou au moins un facteur de détermination du coût de revient actuel d'une éolienne (100) est transmis par l'éolienne (100) à la commande centrale (26) pour générer le deuxième signal (34) pour l'éolienne (100) avec la commande centrale (26).

8. Procédé selon la revendication 6 ou 7, dans lequel les signaux de commande (40) sont générés dans la commande centrale (26) de telle manière qu'une éolienne (100), avec un coût de revient du courant actuellement inférieur en comparaison avec une autre éolienne (100), génère une puissance supérieure à l'autre éolienne (100).

9. Procédé selon l'une quelconque des revendications 1 à 5, dans lequel le premier signal (32) est reçu au moyen de l'éolienne (100) et le deuxième signal (34) est généré par un circuit d'évaluation (54) de l'éolienne (100) et l'éolienne (100) génère des signaux de commande (40) pour se piloter elle-même de telle manière qu'elle génère une puissance dépendant du signal de commande (40) respectif.

10. Procédé selon l'une quelconque des revendications précédentes, dans lequel le signal de commande (40) est généré de telle manière qu'un point de fonctionnement (46) est conservé après une modification, de préférence pendant une période (64) d'au moins une heure, d'au moins 30 minutes ou d'au moins 10 minutes, en particulier de 15 minutes, même si le premier signal (32) change dans la période (64).

11. Procédé selon l'une quelconque des revendications précédentes, dans lequel le signal de commande (40) est généré de telle manière qu'un point de fonctionnement (46) ne change que si le premier signal (32) change de plus d'une deuxième valeur de seuil (70) prédéfinie.

12. Procédé selon l'une quelconque des revendications précédentes, dans lequel un troisième signal (38), qui indique une prévision météorologique, est reçu et un signal de commande (40) est généré en fonction du premier signal (32), du deuxième signal (34) et du troisième signal (38).

13. Éolienne destinée à exécuter un procédé selon l'une quelconque des revendications 1 à 12, dans laquelle l'éolienne (100) est mise au point pour générer ou recevoir un signal de commande (40) dépendant d'un premier signal (32), qui indique un niveau de rémunération d'énergie électrique qui est injectée actuellement et/ou à l'avenir dans un réseau (120) auquel l'éolienne (100) peut être reliée, dans laquelle le premier signal indique le niveau de rémunération d'énergie électrique pour plusieurs moments futurs pendant une période, et est mis au point pour générer une puissance dépendant du signal de commande (40) en pilotant l'éolienne (100) avec le signal de commande (40) pour générer la puissance, dans laquelle le pilotage comprend un enregistrement d'un calendrier avec une modification temporelle du point de fonctionnement (46) pendant une période prédéfinie et le fonctionnement de l'éolienne (100) dans des points de fonctionnement (46) dépendant du calendrier, dans laquelle la période prédéfinie coïncide avec la période pour laquelle le niveau de la rémunération a été reçu avec le premier signal.

14. Commande centrale, en particulier destinée à exécuter un procédé selon l'une quelconque des revendications 1 à 12, pour générer des signaux de commande (40) pour plusieurs éoliennes (100) selon la revendication 13, dans laquelle un premier signal (32) est reçu avec la commande centrale (26), qui indique un niveau de rémunération d'énergie électrique qui est injectée à l'avenir dans un réseau (120) auquel les éoliennes (100) sont respectivement reliées, dans laquelle le premier signal indique le niveau de rémunération d'énergie électrique pour plusieurs moments futurs pendant une période, et pour piloter les éoliennes (100) chacune avec un signal de commande (40) dépendant du premier signal (32), dans laquelle le pilotage comprend un enregistrement d'un calendrier avec modification temporelle du point de fonctionnement (46) pour une période prédéfinie et le fonctionnement de l'éolienne (100) dans des points de fonctionnement (46) dépendant du calendrier, dans laquelle la période prédéfinie coïncide avec la période pour laquelle le niveau de rémunération a été reçu avec le premier signal.

15. Système avec une commande centrale (26) selon la revendication 14 et plusieurs éoliennes (100) selon la revendication 13.
